## Europäisches Patentamt

## European Patent Office

## Office européen des brevets

(19)

(11) Veröffentlichungsnummer: **0 148 324**
A2

(12)

# EUROPÄISCHE PATENTANMELDUNG

(21) Anmeldenummer: 84111222.0

(22) Anmeldetag: 20.09.84

(51) Int. Cl.⁴: **B 29 B 7/54**, B 01 F 7/16, B 01 F 5/00

(30) Priorität: 21.09.83 DE 3334012
18.09.84 DE 3434146

(43) Veröffentlichungstag der Anmeldung: 17.07.85
Patentblatt 85/29

(84) Benannte Vertragsstaaten: CH DE FR GB IT LI NL

(71) Anmelder: **Winner, Eduard, Weierstrasse 3, CH-9500 Wil (CH)**

(72) Erfinder: **Winner, Eduard, Weierstrasse 3, CH-9500 Wil (CH)**

(74) Vertreter: **Jackisch, Walter, Dipl.-Ing. et al, Menzelstrasse 40, D-7000 Stuttgart 1 (DE)**

(54) Vorrichtung zum Bearbeiten von Stoffen.

(57) Die Vorrichtung dient zur Be- und Verarbeitung unterschiedlichster Stoffe, beispielsweise zum Homogenisieren, Vordosieren, Plastifizieren oder Mischen. In einem Arbeitsraum (5) der Vorrichtung ist ein drehbar angetriebenes Bearbeitungswerkzeug (2) untergebracht, das die Stoffe während der Bearbeitung einem Gehäuseauslaß (6) zuführt. Der Arbeitsraum (5) hat einen in Richtung auf den Auslaß (6) im Querschnitt sich verjüngenden Förderabschnitt (7), der in Förderrichtung (8) der Stoffe in einen Bearbeitungsabschnitt (9) des Arbeitsraumes (5) übergeht. Der Bearbeitungsabschnitt (9) verjüngt sich im Querschnitt ebenfalls in Richtung auf den Auslaß (6), jedoch stärker als der Förderabschnitt (7). Die Bearbeitung der Stoffe findet im Bearbeitungsabschnitt (9) statt, während im Förderabschnitt (7) die Stoffe in den Bearbeitungsabschnitt (9) gefördert werden. Je nach Querschnittsverjüngung können die Stoffe gemischt oder homogenisiert oder plastifiziert werden.

**Patentanwalt**
**Dipl.-Ing. Walter Jackisch**
7 Stuttgart N. Menzelstraße 40

Herr Eduard Winner
Weierstr. 3

CH-9500 Wil

0148324

A 1-86 438/soo
18.09.1984

## Vorrichtung zum Bearbeiten von Stoffen

Die Erfindung betrifft eine Vorrichtung zum Bearbeiten von
Stoffen nach dem Oberbegriff des Anspruches 1.

Eine derartige Vorrichtung ist beispielsweise ein Extruder,
mit dem Kunststoffe verarbeitet werden. Im Extrudergehäuse
ist als Bearbeitungswerkzeug eine Schnecke untergebracht,
die die durch einen Beschickungstrichter zugeführten Stoffe,
die als Schmelze, Pulver, Granulat oder Agglomerat zugeführt werden können, zum Auslaß des Arbeitsraumes    fördern
und dabei    verdichten oder    aufschmelzen. Eine solche
Vorrichtung ist jedoch konstruktiv sehr aufwendig, teuer
in der Herstellung und im wesentlichen nur für eine Bearbeitungsart geeignet.

Der Erfindung liegt die Aufgabe zugrunde, eine solche Vorrichtung so auszubilden, daß sie bei einfacher konstruktiver Ausgestaltung kostengünstig hergestellt werden kann
und daß mit ihr unterschiedlichste Stoffe auf verschiedene
Weisen bearbeitet werden können, beispielsweise homogenisiert, vordosiert, plastifiziert oder gemischt werden
können.

Diese Aufgabe wird bei der gattungsgemäßen Vorrichtung erfindungsgemäß mit den kennzeichnenden Merkmalen des An-

– 2 –

spruches 1 gelöst.

Bei der erfindungsgemäßen Vorrichtung ist der Arbeitsraum in zwei in Förderrichtung aneinander anschließende Abschnitte unterteilt, nämlich in den Förderabschnitt und in den anschließenden Bearbeitungsabschnitt. Da beide Arbeitsraumabschnitte sich in Richtung auf den Auslaß im Querschnitt verjüngen, werden die Stoffe während ihres gesamten Durchlaufes durch den Arbeitsraum verdichtet. Da der Bearbeitungsabschnitt im Querschnitt jedoch stärker verjüngt ausgebildet ist als der Förderabschnitt, findet die eigentliche Bearbeitung der Stoffe im Bearbeitungsabschnitt statt, während im Förderabschnitt die Stoffe im wesentlichen nur in den Bearbeitungsabschnitt gefördert werden. Im Zusammenwirken mit dem in beiden Arbeitsraumabschnitten sich erstreckenden Bearbeitungswerkzeug können die Stoffe in unterschiedlichster Weise behandelt werden. Auch unterschiedlichste Stoffe können in den Arbeitsräumen be- und verarbeitet werden, zu thermo- und/oder duroplastische und/oder mineralische und/oder unschmelzbare Produkte. Sie lassen sich mit der Vorrichtung homogenisieren, vordosieren, plastifizieren oder mischen. Die erfindungsgemäße Vorrichtung ist somit vielseitig einsetzbar.

Weitere Merkmale der Erfindung ergeben sich aus den weiteren Ansprüchen, der Beschreibung und der Zeichnung.

Die Erfindung wird anhand einiger in der Zeichnung dargestellter Ausführungsbeispiele näher erläutert. Es zeigen

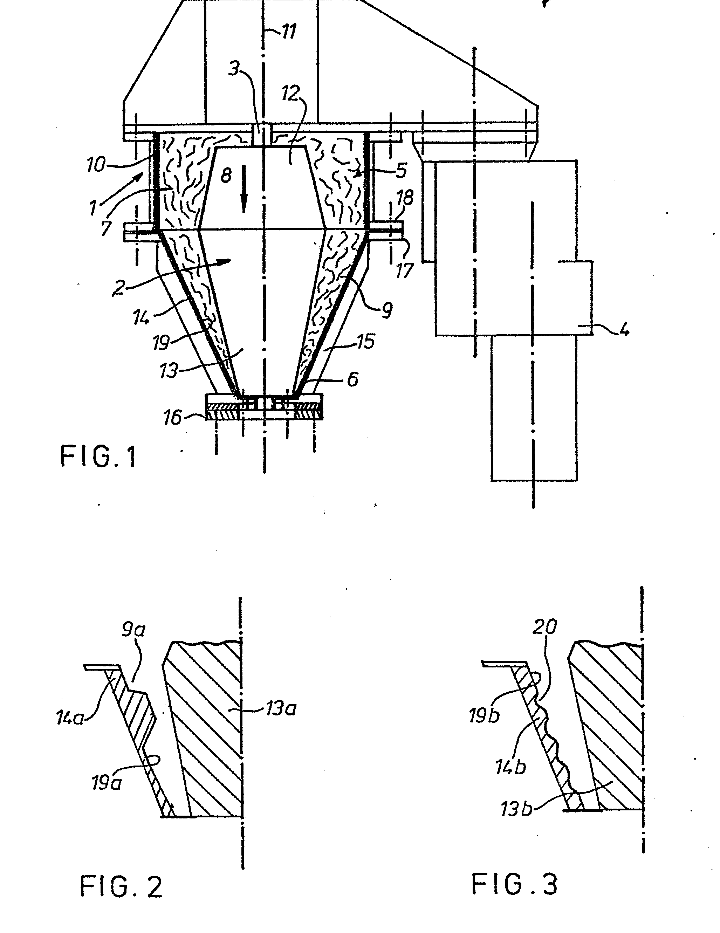

Fig. 1     in schematischer Darstellung eine erfindungsgemäße Vorrichtung,

- 3 -

0148324

| | |
|---|---|
| Fig. 2 und 3 | jeweils in einem Teilschnitt weitere Ausführungsformen von Gehäusen der erfindungsgemäßen Vorrichtung, |
| Fig.4 | in schematischer Darstellung und im Querschnitt eine weitere erfindungsgemäße Vorrichtung, |
| Fig. 5 bis 7 | jeweils im Querschnitt unterschiedliche Formen von Zusatzwerkzeugen für die erfindungsgemäße Vorrichtung gemäß Fig.4, |
| Fig.8 | eine Ansicht eines Bearbeitungswerkzeuges der erfindungsgemäßen Vorrichtung gemäß Fig.4, |
| Fig.9 | eine Vorderansicht des Zusatzwerkzeuges gemäß Fig.5, |
| Fig. 10 | eine Seitenansicht des Zusatzwerkzeuges gemäß Fig.9, |
| Fig. 11 | eine Draufsicht auf das Zusatzwerkzeug gemäß Fig.9, |
| Fig. 12 | ein weiteres Ausführungsbeispiel eines Bearbeitungswerkzeuges der erfindungsgemäßen Vorrichtung, |
| Fig. 13 | eine Schnitt längs der Linie XIII-XIII in Fig.12, |
| Fig. 14 | eine weitere Ausführungsform eines Be- arbeitungswerkzeuges der erfindungsge- mäßen Vorrichtung, |
| Fig. 15 | einen Schnitt längs der Linie XV-XV in Fig. 14, |

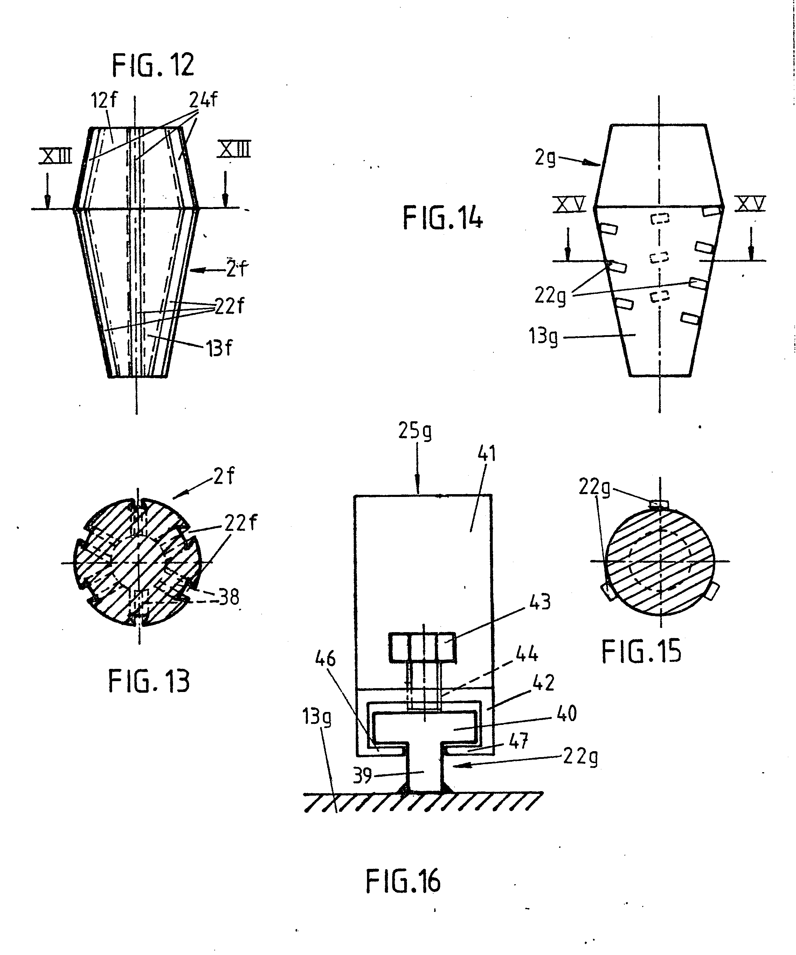

Fig.16          eine Halterung des Bearbeitungswerkzeuges
                gem. Fig.14 in vergrößerter Darstellung und
                mit aufgesetztem Zusatzwerkzeug.

0148324

Die Vorrichtung kann zum Homogenisieren, Vordosieren,
Plastifizieren, thermischen Mischen und thermischen Verbinden von thermo-und/oder duroplastischen und/oder mineralischen
und/oder unschmelzbaren Produkten herangezogen werden.

Die Vorrichtung hat ein Gehäuse 1, in dem ein Bearbeitungswerkzeug 2 untergebracht ist. Es sitzt auf einer Welle 3,
die über ein (nicht dargestelltes) Getriebe von einem
Motor 4 aus angetrieben wird. Das Gehäuse 1 hat einen
Arbeitsraum 5, in dem das Bearbeitungswerkzeug 2 drehbar
ist und in dem die zugeführten Produkte be-und verarbeitet
werden können. Das Gehäuse 1 hat einen Auslaß 6, durch den
die fertig bearbeiteten Produkte aus dem Arbeitsraum 5 gefördert werden.

Der Arbeitsraum 5 hat einen in Richtung auf den Auslaß 6
im Querschnitt sich verjüngenden Förderabschnitt 7, der
in Förderrichtung 8 der Produkte in einen Bearbeitungsabschnitt 9 des Arbeitsraumes 5 übergeht, der sich in Richtung auf den Auslaß 6 ebenfalls verjüngt, jedoch stärker
als der Förderabschnitt 7. Der Bearbeitungsabschnitt 9 verläuft bis zum Auslaß 6, so daß die Produkte vom Übergang
in diesen Bearbeitungsabschnitt bis zum Austritt aus dem
Auslaß 6 bearbeitet werden. Die Produkte können daher intensiv bearbeitet werden, so daß das aus dem Auslaß 6 austretende bearbeitete Produkt optimale Eigenschaften aufweist. Der Bearbeitungsabschnitt 9 ist länger als der
Förderabschnitt 7. Dieser dient im wesentlichen nur dazu,
die zugeführten Produkte gleichmäßig in den Bearbeitungsabschnitt 9 zu fördern, so daß dieser während der gesamten Bearbeitungsdauer gefüllt ist.

Die Querschnittsverjüngung des Förderabschnittes 7 kann dadurch erreicht werden, daß die Seitenwand 10 des Gehäuses 1 konisch in Richtung auf den Auslaß 6 verläuft und das Bearbeitungswerkzeug 2 in diesem Abschnitt zylindrisch oder ebenfalls konisch verjüngt ausgebildet sein kann. Bei einer konstruktiv einfachen und bevorzugten Ausführungsform hingegen wird der Förderabschnitt 7 durch parallel zur Drehachse 11 des Bearbeitungswerkzeuges 2 liegende Wandabschnitte 10 des Gehäuses 1 begrenzt. Vorzugsweise wird der Förderabschnitt 7 durch einen zylindrischen Gehäuseteil begrenzt, während der im Förderabschnitt 7 liegende Teil 12 des Bearbeitungswerkzeuges 2 in Richtung auf den Auslaß 6 konisch sich erweiternd ausgebildet ist. Dieser Teil 12 wird durch einen Kegelstumpf gebildet, der zentrisch im Förderabschnitt 7 angeordnet ist. Dadurch ist der Förderabschnitt 7 ringförmig ausgebildet. Die Querschnittsverringerung des Förderabschnittes 7 des Arbeitsraumes 5 ist verhältnismäßig gering, so daß die zu be-oder verarbeitenden Produkte in diesem Bereich nur wenig zusammengedrückt werden.

Der im Bearbeitungsabschnitt 9 liegende Arbeitsteil 13 des Bearbeitungswerkzeuges 2 ist ebenfalls konisch ausgebildet. Der Bearbeitungsabschnitt 9 kann wiederum durch einen konischen Gehäuseabschnitt und/oder einen konischen Teil des Bearbeitungswerkzeuges begrenzt werden. Wie Fig.1 zeigt, verjüngt sich der Arbeitsteil 13 des Bearbeitungswerkzeuges 2 in Richtung auf den Auslaß 6. Um eine optimale Be- und Verarbeitung der Produkte im Bearbeitungsabschnitt 9 des Arbeitsraumes 5 zu erhalten, erstreckt sich der Arbeitsteil 13 bis zum Auslaß 6, so daß die gesamte Länge des Bearbeitungsabschnittes zum Bearbeiten der Produkte ausgenutzt wird. Der Bearbeitungsabschnitt 9 wird durch schräg zur Drehachse 11 des Bearbeitungswerkzeuges 2 liegende Wandabschnitte 14 des Gehäuses 1, vorzugsweise durch einen konisch in Richtung auf den Auslaß 6 sich verjüngenden Gehäuseteil, begrenzt. Der Konuswinkel des Gehäuseteiles 14 ist größer als der Konuswinkel des Arbeitsteiles 13 des Bearbeitungswerkzeuges 2. Somit wird der Bearbeitungsabschnitt 9 durch zwei unterschiedlich geneigte Konusflächen begrenzt. Die Querschnittsverjüngung des Bearbeitungsabschnittes 9 in Richtung auf den Auslaß 6 ist wesentlich größer als beim Förderabschnitt 7, da im Bearbeitungsabschnitt die Bearbeitung der Produkte stattfinden soll.

Das Bearbeitungswerkzeug 2 bildet infolge der beschriebenen Ausbildung einen Doppelkegel, mit dem in konstruktiv sehr einfacher Weise die unterschiedlichen Querschnittsänderungen in den beiden Abschnitten 7 und 9 des Arbeitsraumes 5 erzielt wird. Der Kegelteil 12 des Bearbeitungswerkzeuges 2 wird üblicherweise gekühlt und dient als reiner Förderteil der Vorrichtung. Der untere Arbeitsteil 13 dient als Mischbzw. Plastifizierteil und wird üblicherweise beheizt. Dadurch wird insbesondere der Plastifiziervorgang im Bearbeitungsabschnitt 9 unterstützt. Der Arbeitsteil 13 kann durch die Heizung auf gleicher Temperatur gehalten werden wie das der Plastifizierung unterliegende Produkt, so daß im Bereich des Arbeitsteiles 13 keine unerwünschte Abkühlung während des Plastifiziervorganges eintritt. Damit auch am Gehäuseteil 14 keine unerwünschte Abkühlung des plastifizierten Produktes eintritt, ist der Gehäuseteil 14 ebenfalls beheizt und zu diesem Zweck mit einem Heizmantel 15 oder dergleichen ausgestattet. Die Temperatur kann beispielsweise von etwa 40°C bis etwa 800°C regelbar sein, so daß die für den jeweiligen Bearbeitungsvorgang günstigste Temperatur eingestellt werden kann. Auch der Arbeitsteil 13 läßt sich in diesem Temperaturbereich beheizen.

Am Auslaß 6 ist am Gehäuseteil 14 ein Ausstoßwerkzeug bzw.
ein Homogenisiersieb 16 befestigt.

Im Arbeitsraum 5 werden die Produkte mittels Fliehkraftförderung und durch Verringerung der Viskosität des Produktes zu diesem Ausstoßwerkzeug bzw. Homogenisiersieb 16
befördert. Das Ausstoßwerkzeug 16 dient zur Formgebung des
auszustossenden Produktes oder zur Gegendruckerzeugung im
Zusammenhang mit der Fliehkraftförderung. Der Antrieb 4
ist so ausgestaltet, daß das Bearbeitungswerkzeug 2 mit
einer Drehzahl zwischen etwa 40 und etwa 200 U/min gedreht
werden kann. Der Antrieb 4 kann auch als 2-Stufen-Antrieb
ausgebildet sein, mit dem das Bearbeitungswerkzeug 2 zum
Beispiel fünf Umdrehungen im Uhrzeigersinn und zwei Umdrehungen im Gegenuhrzeigersinn gedreht werden kann, um
damit eine bessere Homogenisierung bzw. einen Fliehkraftausstoßeffekt zu erzielen.

Die Vorrichtung kann auch zum Verarbeiten von zähelastischen
Produkten verwendet werden. Der Arbeitsteil 13 wird hierzu
tiefgekühlt, beispielsweise mit flüssigem Stickstoff, um
durch eine Tiefkühlung eine Porosität des zu verarbeitenden
Produktes zu erreichen. Dieses zähelastische Produkt kann
dann im Bearbeitungsabschnitt 9 leicht aufgebrochen und
beispielsweise zu einem Granulat verarbeitet werden.

Die Vorrichtung kann auch als Mischer für pastöse Massen
mit beliebig vielen Komponenten eingesetzt werden.

Der Gehäuseteil 14 ist über einen Flansch 17 lösbar an
einem Flansch 18 des zylindrischen Gehäuseteiles 10 befestigt. Dadurch kann der Gehäuseteil 14 gegen anders ausgebildete Gehäuseteile einfach ausgetauscht werden. Auch
das Bearbeitungswerkzeug 2 kann nach Abnehmen des Gehäuseteiles 14 gegen ein anderes Bearbeitungswerkzeug ausgetauscht werden. So muß beispielsweise die Querschnittsverjüngung des Bearbeitungsabschnittes 9 des Arbeitsraumes 5 beim Plastifizieren anders sein als beispielsweise beim Mischen der Produkte. Somit kann je nach dem gewünschten Bearbeitungsgang der Gehäuseteil 14 und/oder das Bearbeitungswerkzeug 2 ausgetauscht werden.

Die Innenwandung 19 des Gehäuseteiles 14 ist bei der Ausführungsform gemäß Fig. 1 glatt. Auch die Konusfläche des Arbeitsteiles 13 des Bearbeitungswerkzeuges 2 ist glatt. Die Innenwandung des Gehäuseteiles kann aber auch profiliert sein, wie die Fig. 2 und 3 zeigen. So kann die Innenwandung 19a des Gehäuseteiles 14a eine unregelmäßige Profilierung aufweisen, so daß der Querschnitt des Bearbeitungsabschnittes 9a nicht stetig in Richtung auf den Auslaß abnimmt. Wie Fig. 2 zeigt, kann der Querschnitt des Bearbeitungsabschnittes 9a sehr stark abnehmen, so daß in diesem Bereich eine sehr hohe Verdichtung des Produktes stattfindet. Auf diese Weise kann die Profilierung optimal an das jeweils zu verarbeitende Produkt und/oder an den gewünschten Arbeitsgang angepasst werden. Die Konusfläche des Arbeitsteiles 13a ist in diesem Ausführungsbeispiel glatt, kann aber ebenfalls eine Profilierung aufweisen. Somit kann bei dieser Variante die Innenwandung 19a und/oder die Konusfläche des Arbeitsteiles 13a profiliert sein (Fig. 2A und 2B).

Bei der in Fig. 3 dargestellten Ausführungsform ist die Innenwandung 19b des Gehäuseteiles 14b mit einer Riffelung 20 versehen. Die so ausgebildete Vorrichtung eignet sich zum Mahlen von zähelastischen Produkten, die in der oben beschriebenen Weise tiefgekühlt worden sind. Die Konusfläche des Arbeitsteiles 13b ist bei dieser Ausführungsform ebenfalls glatt, kann aber auch eine Profilierung aufweisen (Fig. 3A und 3B).

Da die Produkte im Arbeitsraum 5 fertig bearbeitet werden, können sie vom Auslaß 6 umittelbar in eine Presse, zwischen Walzen und dergleichen zur weiteren Verarbeitung gegeben werden. Eine Zwischenlagerung der Produkte ist nicht erforderlich.

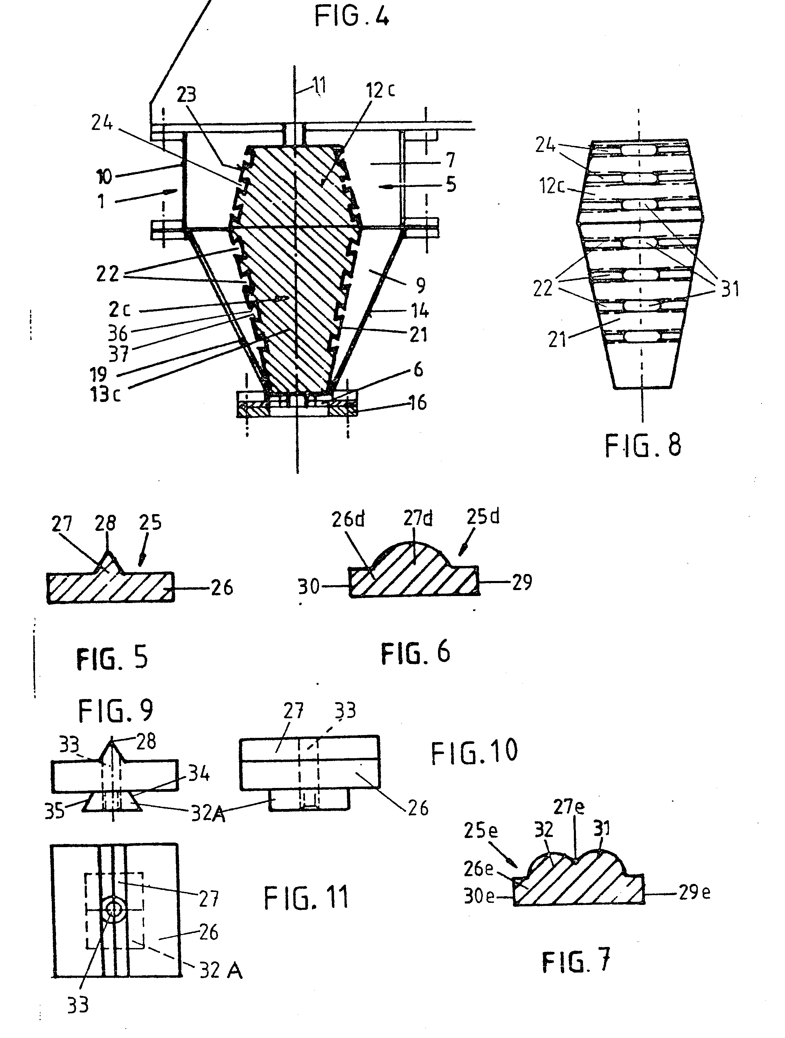

Bei der in Fig.4 dargestellten Ausführungsform ist die konische Mantelfläche 21 des Arbeitsteiles 13c des Bearbeitungswerkzeuges 2c mit Halterungen 22 versehen, die über die Länge des Arbeitsteiles mit Abstand voneinander angeordnet sind (Fig.4 und 8). Sie dienen zur Aufnahme von profilierten Zusatzwerkzeugen, wie sie z.B. in den Fig.5 bis 7 und 9 bis 11 dargestellt sind. Die Halterungen 22 sind durch schwalbenschwanzförmige Ringnuten im Außenmantel 21 des Arbeitsteiles 13c gebildet. Auch der Teil 12c des Bearbeitungswerkzeuges 2c weist an seinem Außenmantel 23 Halterungen 24 für Zusatzwerkzeuge auf. Die Halterungen sind ebenfalls durch schwalbenschwanzförmige Ringnuten gebildet, die über die Länge des Teiles 12c mit Abstand voneinander angeordnet sind und in denen die Zusatzwerkzeuge befestigt werden können. Somit läßt sich am Bearbeitungswerkzeug 2c sowohl am Teil 12c als auch am Arbeitsteil 13c die entsprechende Zahl von Zusatzwerkzeugen lösbar befestigen. Je nach den gewünschten Arbeitsbedingungen können in sämtlichen Halterungen 22,24 die Zusatzwerkzeuge befestigt werden. Es ist aber auch möglich, nur in einigen der Halterungen 22,24 die Zusatzwerkzeuge vorzusehen. Es läßt sich auf diese Weise sowohl in Axialrichtung als auch in Umfangsrichtung die Verteilung der Zusatzwerkzeuge beliebig ändern.

Da die Zusatzwerkzeuge in den Arbeitsraum 5 ragen, läßt sich der freie Querschnitt des Förderabschnittes 7 und/oder des Bearbeitungsabschnittes 9 des Arbeitsraumes 5 verringern. Dadurch kann in einfacher Weise das zur jeweils erforderlichen Bearbeitung der Produkte notwendige Maß der Querschnittsverjüngung eingestellt werden.
Die verschiedenen Arbeitsgänge lassen sich somit optimal
durchführen, so daß das aus dem Auslaß 6 austretende
Material optimale Eigenschaften aufweist.

Selbstverständlich können auch die Gehäuseteile 10,14
mit solchen Halterungen versehen sein, so daß sich die
Zusatzwerkzeuge auch am Gehäuse 1 befestigen lassen. In
diesem Fall kann der Mantel des Bearbeitungswerkzeuges
2c glatt sein. Außerdem ist es möglich, sowohl die Gehäuseteile 10,14 als auch das Bearbeitungswerkzeug 2c
mit Halterungen zu versehen, so daß die Zusatzwerkzeuge
am Gehäuse 1 und am Bearbeitungswerkzeug 2c befestigt
werden.

Das Zusatzwerkzeug 25 gemäß den Fig. 5 und 9 bis 11 hat einen in der jeweiligen Halterung 22, 24 einzusetzenden Grundkörper 26 sowie einen Profilabschnitt 27, der in den jeweiligen Abschnitt des Arbeitsraumes 5 ragt. Der Profilabschnitt 27 hat dreieckförmigen Querschnitt und erstreckt sich über die gesamte Länge des Zusatzwerkzeuges 25 (Fig. 11). Es kann entsprechend dem Bearbeitungswerkzeug 2c gekrümmt sein, so daß in Umfangsrichtung des Bearbeitungswerkzeuges benachbarte Zusatzwerkzeuge 25 mit einer Kante 28 ihrer Profilabschnitte 27 auf einem Kreis um die Drehachse 11 des Bearbeitungswerkzeuges 2c liegen. Die Zusatzwerkzeuge 25 können so ausgebildet sein, daß in Umfangsrichtung benachbarte Zusatzwerkzeuge aneinander anschließen. Sie können aber auch in Umfangsrichtung Abstand voneinander haben. Damit die Zusatzwerkzeuge 25 in die Nuten 22, 24 eingesetzt werden können, ist jede Nut mit einem Einführabschnitt 31 (Fig. 8) versehen. Er ist an einen Befestigungsteil 32A(Fig. 9 -11) des Zusatzwerkzeuges 25 angepaßt, der durch den Einführabschnitt 31 in die Nut 22, 24 eingesetzt werden kann. Der Befestigungsteil 32Ahat einen den Nuten 22, 24 angepaßten Querschnitt und weist rechteckigen Umriß auf (Fig. 11). Der Grundkörper 26 des Zusatzwerkzeuges 25 hat ebenfalls rechteckigen Umriß, ist jedoch größer als der Befestigungsteil 32A(Fig. 11), der vorzugsweise einstückig mit dem Grundkörper 26 ausgebildet ist. Der Einführabschnitt 31 der Nuten 22, 24 hat gleichen Umriß wie der Befestigungsteil 32Ader Zusatzwerkzeuge 25, so daß sie bequem eingesetzt und dann in den Nuten an die gewünschte Stelle verschoben werden können. Die Nuten 22, 24 sind so ausgebildet, daß die Befestigungsteile 32A trotz des gekrümmten Verlaufes der Nuten in ihnen verschoben werden können. Zur Festlegung der Zusatzwerkzeuge 25 in den Nuten 22, 24 dienen Befestigungs- oder Klemmschrauben, die in Gewindebohrungen 33 der Zusatzwerkzeuge 25 geschraubt werden. Die Gewindebohrungen 33 durchsetzen den Befestigungsteil 32 A, den Grundkörper 26 und den Profilabschnitt 27 der Zusatzwerkzeuge 25 (Fig. 9 bis 11). Im Ausführungsbeispiel ist das Zusatzwerkzeug 25 nur mit einer einzigen, zentral angeordneten Gewindebohrung 33 versehen; selbstverständlich kann das Zusatzwerkzeug 25 auch mit zwei oder mehr Gewindebohrungen 33 versehen sein. Beim Einschrauben der Befestigungsschraube stützt sie sich auf dem Boden der jeweiligen Nut 22, 24 ab, während die entgegengesetzt zueinander geneigten Schrägflächen 34, 35 (Fig. 8) gegen die entsprechenden Schrägflächen 36, 37 (Fig. 4) der jeweiligen Nut 22, 24 gezogen und somit das Zusatzwerkzeug kraftschlüssig am Bearbeitungswerkzeug 2 gehalten wird.

Das Zusatzwerkzeug 25 d gemäß Fig. 6 hat einen im Querschnitt etwa halbkreisförmigen Profilabschnitt 27d. Er ist - entsprechend dem Profilabschnitt 27 gemäß Fig. 5 - einstückig mit dem Grundkörper 26d ausgebildet. Der Profilabschnitt 27d liegt in halber Breite des Grundkörpers 26 d. Der Übergang des Profilabschnittes 27a in den Grundkörper 26d erfolgt mit Abstand von den Längsrändern 29, 30 des Grundkörpers. Das Zusatzwerkzeug 25d ist im übrigen gleich ausgebildet wie die Ausführungsform gemäß den Fig.5 und 9 bis 11.

Bei der Ausführungsform gemäß Fig. 7 wird der Profilabschnitt 27 e des Profilwerkzeuges 25e durch zwei aneinander anschließende, im Querschnitt teilkreisförmige Teile 31 und 32 gebildet, die wiederum in halber Breite des Grundkörpers 26e liegen und mit Abstand von dessen Seitenrändern 29e, 30e in ihn übergehen. Im übrigen ist
das Zusatzwerkzeug 25e gleich ausgebildet wie das Ausführungsbeispiel gemäß den Fig. 5 und 9 bis 11.

Anstelle der dargestellten Profilformen können die Zusatzwerkzeuge auch jede andere geeignete Querschnittsausbildung haben. Durch eine entsprechende Profilgebung kann
die Querschnittsausbildung des Arbeitsraumes 5 sowohl im
Förderabschnitt 7 als auch im Bearbeitungsabschnitt 9
optimal den jeweils gewünschten Arbeitsbedingungen angepaßt werden.

Auch der axiale Abstand der Halterungen 22, 24 voneinander
kann unterschiedlich groß gewählt werden. Anstelle der
schwalbenschwanzförmigen Ausbildung können die Nuten auch
viereckigen Querschnitt haben.
In diesem Fall sind die Nuten mit Gewindebohrungen versehen,
in welche die Befestigungsschrauben für die Zusatzwerkzeuge geschraubt werden. Damit die Zusatzwerkzeuge an
mehreren Stellen längs des Umfanges des Bearbeitungswerkzeuges befestigt werden können, sind wenigstens in
einigen der Nuten mehrere Gewindebohrungen vorgesehen.

Das Bearbeitungswerkzeug 2f gemäß den Fig. 12 und 13 hat
Halterungen 22f, 24f, die in seiner Längsrichtung, vorzugsweise über die ganze Länge, verlaufen. Diese Halterungen 22f, 24f sind gleich ausgebildet wie bei der Ausführungsform gemäß den Fig. 4 und 8. In Fig. 13 sind die
Gewindebohrungen 38 im Boden der Nuten 22f, 24f für die
Befestigungsschrauben der Zusatzwerkzeuge dargestellt.
Sie können aber auch, wie zuvor beschrieben, kraftschlüssig
in den Nuten gehaltert werden.

Die in Längsrichtung verlaufenden Nuten können nur im
Arbeitsteil 13f oder nur im Teil 12f vorgesehen sein,

— 14 —

während der jeweils andere Teil des Bearbeitungswerkzeuges 2c umlaufende Nuten gemäß den Fig. 4 und 8 aufweisen kann.

Bei der Ausführungsform gemäß den Fig. 14 bis 16 sind die Halterungen 22g durch Vorsprünge am Bearbeitungswerkzeug 2g gebildet, die über den Umfang zumindest des Arbeitsteiles 13g verteilt angeordnet sind. Die Halterungen 22 g haben T-förmigen Querschnitt (Fig. 16 ) und stehen mit ihrem Fuß 39 senkrecht von der Wandung des Arbeitsteiles 13 g ab, so daß der Steg 40 der Halterung 22g Abstand von der Wandung des Arbeitsteiles hat. Die Halterungen 22 g sind auf den Arbeitsteil 13g aufgeschweißt und nehmen Zusatzwerkzeuge 25g auf. Sie haben einen quer vom Arbeitsteil 13g abstehenden Arbeitsabschnitt 41, der an einen quer zu ihm liegenden Halterungsabschnitt 42 anschließt. Er ist im Querschnitt C-förmig ausgebildet und umgreift den Steg 40 der Halterung 22g mit Spiel, so daß das Zusatzwerkzeug 25 g einfach auf die Halterung aufgeschoben werden kann. Zur Befestigung des Zusatzwerkzeuges 25g ist wenigstens eine Klemmschraube 43 vorgesehen, die durch eine Gewindebohrung 44 im C-Steg 45 des Halterungsabschnittes 42 geschraubt wird und sich am Steg 40 der Halterung 22 g abstützt. Durch Anziehen der Klemmschraube 43 wird der Halterungsabschnitt 42 mit den Steg 40 der Halterung 22 g untergreifenden, gegeneinander gerichteten Schenkeln 46, 47 gegen den Steg gezogen und so das Zusatzwerkzeug 25g an der Halterung 22 g festgeklemmt. Die Zusatzwerkzeuge 25g lassen sich auf diese Weise einfach und schnell an den Halterungen 22g befestigen und von ihnen lösen.

Die Halterungen 22g können auch so ausgebildet sein, daß

— 14 —

- 15 -

sie über die ganze Länge oder den gesamten Umfang des Arbeitsteiles 13g verlaufen. Dabei können die Halterungen 22g auch schraubenlinienförmig angeordnet sein.

Mit den Zusatzwerkzeugen kann die Vorrichtung in einfacher Weise auf unterschiedliche Arbeiten eingestellt werden.

Die auswechselbaren Zusatzwerkzeuge lassen sich einfach montieren und demontieren. Es müssen insbesondere nicht mehr ganze Gehäuseteile oder das komplette Bearbeitungswerkzeug ausgetauscht werden, so daß die Umstellung der Vorrichtung auf verschiedene, durchzuführende Arbeiten in kostengünstiger Weise vorgenommen werden kann.

Dipl.-Ing. Walter Jackisch
7 Stuttgart N. Menzelstraße 40

Eduard Winner
Weierstraße 3
CH-9500 Wil

A 1-86 438/soo
0148324

ANSPRÜCHE

1. Vorrichtung zum Bearbeiten von Stoffen, mit einem Gehäuse, in dem in einem Arbeitsraum ein drehbar angetriebenes Bearbeitungswerkzeug untergebracht ist, das
die Stoffe während der Bearbeitung einem Auslaß des
Gehäuses zuführt,
dadurch gekennzeichnet, daß der Arbeitsraum (5) einen
in Richtung auf den Auslaß (6) im Querschnitt sich verjüngenden Förderabschnitt (7) aufweist, der in Förderrichtung (8) der Stoffe in einen Bearbeitungsabschnitt
(9) übergeht, der sich in Richtung auf den Auslaß stärker
verjüngt als der Förderabschnitt.

2. Vorrichtung nach Anspruch 1,
dadurch gekennzeichnet, daß der Bearbeitungsabschnitt
(9) länger ist als der Förderabschnitt (7) und bis zum
Auslaß (6) verläuft.

3. Vorrichtung nach Anspruch 1 oder 2,
dadurch gekennzeichnet, daß der Förderabschnitt (7)
durch parallel zur Drehachse (11) des Bearbeitungswerkzeuges (2) liegende Wandabschnitte (10) des Gehäuses (1), vorzugsweise durch einen zylindrischen
Gehäuseteil begrenzt ist, und daß der im Förderabschnitt liegende Teil (12) des Bearbeitungswerkzeuges
in Richtung auf den Auslaß (6) konisch sich erweiternd
ausgebildet ist.

4. Vorrichtung nach einem der Ansprüche 1 bis 3,
dadurch gekennzeichnet, daß der im Bearbeitungsabschnitt (9) liegende Arbeitsteil (13) des Bearbeitungswerkzeuges (2) in Richtung auf den Auslaß (6) konisch
verjüngt ausgebildet ist.

-2-

5. Vorrichtung nach einem der Ansprüche 1 bis 4, dadurch gekennzeichnet, daß der Bearbeitungsabschnitt (9) durch schräg zur Drehachse (11) des Bearbeitungswerkzeuges (2) liegende Wandabschnitte (14) des Gehäuses (1), vorzugsweise durch einen konisch in Richtung auf den Auslaß (6) sich verjüngenden Gehäuseteil, begrenzt ist.

6. Vorrichtung nach einem der Ansprüche 1 bis 5, dadurch gekennzeichnet, daß die Innenwandung (19a,19b) des den Bearbeitungsabschnitt (9a,9b) umgebenden Gehäuseteiles (14a,14b) und/oder die Mantelfläche des Arbeitsteiles (13a,13b) des Bearbeitungswerkzeuges (2) mit einer Profilierung (20) versehen sind.

7. Vorrichtung nach einem der Ansprüche 1 bis 6, dadurch gekennzeichnet, daß der im Förderabschnitt (7) liegende Teil (12) des Bearbeitungswerkzeuges (2) kühlbar ist.

8. Vorrichtung nach einem der Ansprüche 1 bis 7, dadurch gekennzeichnet, daß der Arbeitsteil (13,13a,13b) des Bearbeitungswerkzeuges (2) beheizbar oder kühlbar ist.

9. Vorrichtung nach einem der Ansprüche 1 bis 8, dadurch gekennzeichnet, daß zumindest im Bereich des Bearbeitungsabschnittes (9) mindestens eine Halterung (22,22f,22g) für wenigstens ein auswechselbares Zusatzwerkzeug (25,25d,25e,25f) vorgesehen ist, mit dem der Querschnitt des Bearbeitungsabschnittes (9) des Arbeitsraumes (5) veränderbar ist.

10. Vorrichtung nach Anspruch 9, dadurch gekennzeichnet, daß die Halterung (22,22f) durch eine Nut im Mantel (21,23) des Bearbeitungswerkzeuges (2c,2f) und/oder in der Innenseite (19) des Gehäuses (1) gebildet ist.

11. Vorrichtung nach einem der Ansprüche 1 bis 10,
dadurch gekennzeichnet, daß das Bearbeitungswerkzeug
(2c,2f,2g) und/oder das Gehäuse (1) im Förderabschnitt
(7) mit wenigstens einer Halterung (24,24f) versehen
sind.

12. Vorrichtung nach einem der Ansprüche 9 bis 11,
dadurch gekennzeichnet, daß das Zusatzwerkzeug (25,
25d,25e,25f) kraftschlüssig an der Halterung (22,
24;22f,24f;22g) gehalten ist.

13. Vorrichtung nach einem der Ansprüche 3 bis 7,
dadurch gekennzeichnet, daß die Halterung (22,24;
22f,24f) durch eine Schwalbenschwanznut gebildet ist,
die über wenigstens einen Teil des Umfangs des Bearbeitungswerkzeuges (2c) verläuft.

14. Vorrichtung nach einem der Ansprüche 9 bis 13,
dadurch gekennzeichnet, daß die Halterung (22,24;
22f,24f,22g) wenigstens über einen Teil der Länge
des Bearbeitungswerkzeuges (2c,2f,2g) verläuft.

15. Vorrichtung nach einem der Ansprüche 9 und 11 bis 14,
dadurch gekennzeichet, daß die Halterung (22g) durch
wenigstens einen auf dem Bearbeitungswerkzeug (2g)
und/oder auf der Innenseite (19) des Gehäuses (1)
sitzenden Profilteil gebildet ist, der vorzugsweise
T-förmigen Querschnitt hat.

16. Vorrichtung nach Anspruch 15,
dadurch gekennzeichnet, daß der Befestigungsteil (42)
des Zusatzwerkzeuges (25g) C-förmigen Querschnitt hat
und mit gegeneinander gerichteten Schenkeln (46,47)
einen Steg (40) der Halterung (2g) untergreift.

Eduard Winner
Weierstraße 3
CH-9500 Wil

A 1-86 438/800
18.9.1984
Ü148324

1/3

FIG.1

FIG.2

FIG.3

Eduard Winner
Weierstraße 3
CH-9500 Wil

A 1-86 4567500
18.9.1984

0148324

2/3

FIG.4

FIG.8

FIG.5

FIG.6

FIG.9

FIG.10

FIG.11

FIG.7

Eduard Winner
Weierstraße 3
CH-9500 Wil

A 1-86 438/sco
18.9.1984

0148324

3/3

**FIG. 12**

12f  24f
XIII          XIII
2f
22f
13f

**FIG. 13**

2f
22f
38

**FIG.14**

2g
XV          XV
22g
13g

**FIG.15**

22g

**FIG.16**

25g
41
43
46
44
42
40
13g
47
39        22g